# EUROPEAN PATENT APPLICATION

(11) **EP 4 778 720 A2**
(43) Date of publication of application: **22.07.2026**
(21) Application number: 26167378.4
(22) Date of filing: 16.06.2022
(51) Int. Cl.: B32B 27/30

(54) **FORMABLE AND TEAR RESISTANT POLYMERIC COMPOSITE**

(30) Priority: 18.06.2021 US 202163212140 P
(62) Divisional of application: 22735128.5
(71) Applicant: Canco Hungary Investment Ltd., 9027 Györ (HU)
(72) Inventor: TEATHER, Eric, Elkton, 21921 (US); ELFERING, Bernd, 48683 Ahaus (DE); HAUSMANN, Johannes, 48341 Altenberge (DE)
(74) Representative: Noble, Frederick

(57) **Abstract**

A formable and tear resistant polymeric composite is both formable, such as through thermal forming, and tear resistant, wherein the composite has a high resistance to cut propagation. This combination of properties is achieved by combing an inner formable portion with a tear resistant outside portion and an inside portion, which may also be configured to be tear resistant. The inner formable portion includes a plurality of oriented polymer layers that are bound together by a lower melting temperature inner adhesive and enables thermal forming of the composite. The outside portion includes a woven fabric including polymeric strands, such as tapes, that are preferably oriented to increase strength and tear resistance. The separation of the woven fabric layers from the inner portion enables the composite to be formed into a shape, such as a shell for luggage, while having improved tear resistance.

## Description

### CROSS REFERENCE TO RELATED APPLICATIONS

This application claims the benefit of priority to U.S. Provisional Patent Application No. 63/212,140, filed on June 18, 2021.

### BACKGROUND OF THE INVENTION

### Field of the Invention

The invention relates to a formable and tear resistant polymeric composite that is both formable, such as through thermal forming, and tear resistant, wherein the composite has a high resistance to cut propagation.

### Background

Traditional thermoformable materials used in appliances, vehicle body parts, luggage shells include neat thermoplastic materials such as polypropylene, polycarbonate, Acrylonitrile Butadiene Styrene (ABS), high density polyethylene (HOPE). Sheets of these homogenous thermoplastics are heated then formed under minimal pressure using vacuum forming equipment. Vacuum forming equipment subjects the material to a one-sided tool and counts on the material to be heated close to its melting point and form to the tool under a constant vacuum sometimes accompanied by a "plug assist" or positive pressure bladder. Vacuum forming of pure thermoplastic polymers can achieve complex 3D geometries. Parts made from these plastics have mechanical properties and durability that mirror the inherent properties of the unprocessed material.

Thermoplastic composite materials can sometimes be thermoformed to achieve stronger or lighter weight parts compared to pure thermoplastic sheet materials. Thermoplastics such as polypropylene can be combined with woven, nonwoven, unidirectional or chopped fiber to form a composite sheet that can be thermoformed similarly to homogenous plastic sheets. Fibers typically will be a dissimilar plastic or inorganic material such as glass, carbon or aramid fiber to increase the strength of the resultant composite material. Composites using chopped fiber can be formed similarly to the homogenous sheet materials depending on the fiber size or length and the ability for the fibers to move or contour to the formed geometry. The use of woven or unidirectionally aligned layers in a thermoplastic begins to limit the amount of draw and complexity of formed parts due to the added strength of the materials and the limited ability for woven, aligned or cross-plied layers to stretch or contour. In such cases, forming techniques such as compression molding, where the material is subjected to increased pressure between two matching tool surfaces is required. Often the combination of heat and hydraulic press pressure is required to form such thermoplastic composite materials.

Self-reinforced thermoplastic composites have been developed wherein layers of oriented, high tenacity fibers or tapes are combined in a matrix of the same polymer. One such product is SRPP (self reinforced polypropylene) sold under the brand Curv^{®} by Propex Furnishing Solutions GmbH & Co. KG, (Gronau, Germany). SRPP can be made by weaving high tenacity extruded tapes into a fabric and then combining the layers under high, uniform pressure and temperature to partially melt the layers and create a thermoplastic bond between the inner layers. The resultant compacted sheet consists of the high strength woven fibers or tapes in a matrix of the same polymer and exhibits significantly more strength and stiffness than a sheet of the same thickness of homogenous polypropylene. SRPP sheets also have unique high impact and tear resistance properties due to the woven nature of the encapsulated layers. Thermoforming such SRPP sheet presents challenges; the suspended high strength tapes have molecular orientation due to stretching during forming and tend to shrink in relation to the melted matrix when exposed to increasing temperature. This shrinking effect happens in both orientations of the fabric and requires multi-side clamping of the sheet for tension control prior to and while being subjected to pressure in the forming tool. Like traditional fiber-filled composites, SRPP sheets cannot be formed with a one-sided vacuum tool and require 2-sided matched tooling and pressure to form parts with any depth or features.

### SUMMARY OF THE INVENTION

The invention is directed to a formable and tear resistant polymeric composite that is both formable, such as through thermal forming, and tear resistant, wherein the composite has a high resistance to cut propagation. This combination of properties is achieved by combing an inner formable portion with a tear resistant outside portion and an inside portion, which may also be configured to be tear resistant. The inner formable portion includes a plurality of oriented polymer layers that are bound together by a lower melting temperature inner adhesive. This arrangement enables the inner formable portion to retain a shape and enables thermal forming of the composite. The outside portion comprises a woven fabric that includes polymeric strands of polymeric material, such as tapes, yarns or filaments, that are preferably oriented to increase strength and tear resistance. An exemplary weave is a twill and more preferably a sateen weave, as a sateen weave has higher tear resistance than other weaves. The inside portion may have a similar or the same construction as the outside portion to balance out any stresses. The separation of the woven fabric layers from the inner portion enables the composite to be formed into a shape, such as a shell for luggage, while having improved tear resistance. Formable, as used herein, means that the composite can be shaped to form a three-dimensional shape, that produces or contains a volume, such as bowl or curved shape, for example.

An exemplary inner portion has a plurality of oriented polymer layers that are bound together by an inner adhesive. The oriented polymer layers may be thin film layers that are planar having a thickness of no more than about 200um, no more than about 150um, no more than about 100um, no more than about 70um, no more than about 50um, no more than about 40um, no more than about 25um and any range between and including the thickness values provide. The thinner the individual film layers, the more easily the formable and tear resistant polymeric composite may be formed into a shape. The oriented polymer layers may comprise or consists of a thermoplastic polymer, such as polyethylene, or polypropylene, or polyethylene terephthalate (PET), for example.

An adhesive for the inner portion or for the outside and/or inside portion may be a thermoplastic adhesive that bond layers through the melting of the thermoplastic.

The plurality of oriented polymer layers may be oriented uniaxially and/or biaxially. The oriented polymer layers may be uniaxially oriented, wherein they are stretched in one direction, such as in the machine direction, to increase the tensile strength in the machine direction. The oriented polymer layers may be biaxially oriented, wherein they are stretched in two or more directions to increase the tensile strength in two or more directions, such as in both the machine and cross-machine directions. It may be desirable to alternate the orientation of the individual oriented polymer layers especially when they are uniaxially oriented. This is referred to as a lay-up configuration. For example, a first layer of the oriented polymer layers may be configured in an oriented axis in a first direction and a second and adjacent layer may be oriented with the oriented axis substantially orthogonal from the oriented axis of the first layer, or from about 85 degrees to about 95 degrees of each other. The layers may be referred to as a lay-up, with an alternating orthogonal configuration, with a 45-degree offset orientation, or other offset orientation from layer to layer. A plurality of oriented polymer layers may be bounded together to form the inner formable portion including, but not limited to, about 5 or more, about 8 or more, about 10 or more, about 12 or more, about 15 or more and any range between and including the number of oriented polymer layers provided. Multiple layers of the oriented polymer layers may increase strength and improve uniformity over a single thicker layer of the oriented polymer layer. Multiple layers are preferred when there is a lay-up of oriented polymer layers with an offset angle. Increased layers can be used to increase the thickness of the total structure. The thickness of the inner formable portion may be about 0.3mm or more, about 0.5mm or more, about 1mm or more, about 2mm or more, about 1.5mm or more, about 2.0mm or more, about 3.0mm or more, about 4.0mm or more and any range between and including the thickness values provided. The thicker the inner portion is, the greater the stiffness and strength of the formable and tear resistant polymeric composite. An exemplary biaxially oriented polymer layer has the properties as provided in Table 1:

**Table 1**

| Property | Unit | Result | Test Method |
|---|---|---|---|
| **Thickness** | [mm] | **0.039** | *DIN ISO 9863-1* |
| **Weight** | [g/m²] | **36.4** | |

| **Elongation** | | | |
|---|---|---|---|
| **MD** | [%] | **41.3** | *ISO 527* |
| **CD** | [%] | **7.8** | *ISO 527* |

| **Tenacity** | | | |
|---|---|---|---|
| **MD** | [MPa] | **83.7** | *ISO 527* |
| **CD** | [MPa] | **111.6** | *ISO 527* |

| **Modulus** | | | |
|---|---|---|---|
| **MD** | [GPa] | **2.6** | *ISO 527* |
| **CD** | [GPa] | **3.9** | *ISO 527* |

| **Tear resistance** | | | |
|---|---|---|---|
| **MD** | [N/5 cm] | * | *DIN 53515* |
| **CD** | [N/5 cm] | * | *DIN 53515* |

| **gloss level** | Angle | Gloss | |
|---|---|---|---|
| | 20° | **44.5** | *ISO 2813* |
| | 60° | **94.7** | *ISO 2813* |
| | 80° | **88.6** | *ISO 2813* |

**As** shown in Table 1, an oriented polymer layer has a thickness of about 0.04mm, and an areal weight of about 36g/m². The abbreviations of MD an CD refer to machine direction and cross-machine direction respectively. As shown, the tenacity in the machine and cross machine directions are relatively balanced as this is a biaxially oriented polymer layer.

**An** inner adhesive layer may be configured between the oriented polymer layers to bond them together. The adhesive may have an effectively lower melt temperature than the oriented polymer layers to enable bonding oriented polymer layers of the inner portion together without losing the increased tensile strength in the oriented polymer layers from heating above or near the melt temperature of the oriented polymer layers. The inner adhesive may be the same polymer but may be a lower molecular weight, for example. An inner adhesive layer may have a melt temperature that is at least about 10°C less than the oriented polymer layer, at least about 20°C less than the oriented polymer layer, at least about 40°C less than the oriented polymer layer, at least about 60°C less than the oriented polymer layer and any range between and including the melt temperatures provided. A greater difference in the melt temperature between the inner adhesive layer and the oriented polymer layer provides a larger temperature manufacturing window to operate.

An exemplary inner adhesive layer may be a separate layer or may be an integral layer that is coupled to or adhered to the oriented polymer layer prior to lay-up and bonding. The inner adhesive layer may be continuous or a discontinuous layer and may be integral to one or both sides of the oriented polymer layer.

An exemplary formable and tear resistant polymeric composite comprises an outside tear resistant portion that comprise at least one woven fabric layer. The inside layer of the formable and tear resistant polymeric composite may have the same or similar construction as the outside layer to balance out stress and prevent curl when the material is heated. An outside layer may have one or more woven fabric layers bonded together by an outside adhesive layer, such as two or more, three or more or four or more. If too many woven layers are included in the outside or inside portion, the formable and tear resistant polymeric composite may become difficult to form as detailed herein. Again, the outside adhesive layer preferably has a lower melt temperature than the woven fabric layer material, or the strands of the woven fabric layer, such as at least about 10°C less than the oriented polymer layer, at least about 20°C less than the oriented polymer layer, at least about 40°C less than the oriented polymer layer, at least about 60°C less than the oriented polymer layer and any range between and including the melt temperatures provided. The inside portion may likewise have from about one to five woven fabric layers that are bounded together with an adhesive layer having a lower melt temperature.

A woven fabric layer comprises strands that are woven together in a weave pattern that is preferably tear resistant, such as a twill weave and more preferably a sateen weave. The strands may be tapes that are narrow strips of film, yarns or fibers that have a round or flat cross section or an irregular cross section, for example. The strands may be oriented strands, such as uniaxially oriented to increase tenacity and improve cut resistance. The strands may also be biaxially oriented. An exemplary strand is uniaxially oriented polypropylene tape having the properties provided in Table 2:

**Table 2**

| **Property** | **Unit** | **Result** | **Test Method** |
|---|---|---|---|
| **Fineness** | [dtex] | 1100 +/- 55 | |
| **Tape width** | [mm] | 2,4 +/- 0,1 | |
| **Tape thicknes** | -[µm] | 50 +/-7 | |
| **Tenacity** | [cN/dtex] | > 6,0 | |
| **Elongation** | [%] | 10 +/- 1 | |
| **Modulus** | [cN/dtex] | 95 +/- 10 | |
| **Shrinkage** | [%] | 3 +/- 1 | (Testrite 130°C / 2 Minutes) |

The tenacity of more than 6.0cN/dtex is equivalent to about 660mPa, or about six times higher than the tenacity of the oriented polymer layer shown in Table 1.

An exemplary outside and/or inside portion of the formable and tear resistant polymeric composite comprises fibers that may be bound to an outer surface of a woven fabric layer to produce a matt finish or reduce gloss and to improve cut and resistance. The fibers may be laid onto the outer surface of the woven fabric layer and bound with an adhesive. An adhesive layer may encapsulate the fibers between said adhesive sheet and the outer surface of the woven fabric layer or may be a discontinuous adhesive layer. The fibers may be a core shell type fiber that has an adhesive in the shell that can be used to adhere the fibers to the outer surface of the woven fabric layer, or to an adhesive or other film layer thereon. The fibers may be a blend of two or more types of fibers wherein a first fiber has a lower melt temperature than a second fiber to enable the first fiber to bond to a layer of the outside portion, such as a woven fabric layer and also adhere the second fiber to said layer of the outside portion. A first fiber may be a thermoplastic, such as polypropylene and a second fiber may be a polyamide fiber having a higher melt temperature than the first fiber. A second fiber may be a fiber that is metal, glass, carbon, or a thermoset material that is not a thermoplastic. A ratio of a first thermoplastic fiber to a second fiber having a higher melt temperature than the first fiber and in some cases being a non-thermoplastic material, may be about 025:1 or more, about 050:1 or more, about 0.75:1 or more, about 1:1 or more, about 1.25:1 or more, about 1.5:1 or more, about 2:1 or more and any range between and including the ratios provided.

The fibers may be configured on the outside and/or inside portion in an areal weight of about 10g/m² or more, about 20g/m² or more, about 30g/m² or more, about 50g/m² or more, about 100g/m² or more, about 200g/m² or more, about 300g/m² or more and any range between and including the areal weights provided. A higher areal weight of the fibers may result in less gloss and more textured surface and may improve cut resistance, especially when the fibers are metal, carbon or glass or some other tear resistant material. The fibers may have a length about 10mm or more, about 25mm or more, about 50mm or more, about 75mm or more, about 100mm or more and any length between and including the lengths provided. The denier of the fiber may 2dtex or more, about 3dtex or more, about 5dtex or more, about 10dtex or more, and any range between and including the denier values provided. Note that 1 Decitex [dtex] is equivalent to 0.9 Denier [den].

The fibers may be coupled to the outside or inside portion by an adhesive which may be a cover layer or part of a cover layer that is configured over the fibers. A cover layer may be configured on the outside surface of the outside portion and/or inside portion to prevent the fibers from becoming dislodged and may be thin to enable the cover layer to contour over the fibers.

The fibers may be inserted at least partially into a portion of the outside and/or inside portion, such as by needle punching, for example. The fibers may extend into a woven fabric layer and may extend from an outer surface to an inner surface of the woven fabric layer. Fibers that extend all the way through a layer of the outside portion may be more durably secured to the outside portion.

**The** plurality of fibers may be included in a concentration to reduce gloss by changing the surface roughness of the formable and tear resistant polymeric composite. A matt finish is desirable in many applications. A matt finish may be determined through testing materials according to the current edition of ISO 2813. A matt finish as defined herein according to this test method has a gloss of less than 20 at 60 degrees. The gloss reported by ISO 2813 is the ratio multiplied by 100 of the luminous flux reflected from a specimen to that reflected by a glass surface with a refractive index of 1,567 at a wavelength of 587,6 nm in specular direction for a specified reflection angle and specified aperture angles of light source and receptor.

The surface roughness of an outside surface may also indicate the finish of the material, such as gloss or matt finish. A rougher surface will be less glossy and have a more matt finish. A matt finish according to surface roughness may be a surface with an Ra value of at least 1.0 microns and preferably 2.0 microns or more. The surface roughness (Ra) of the outside surface of the outside portion may be about 1.0microns or more, about 2.0micron or more, about 3.0microns or more, about 5microns or more, about 10microns or more and any range between and including the surface roughness values provided. In addition, the fibers may be a color for aesthetic purposes. The fibers may be a different color than a woven fabric layer or a cover layer, for example.

Fibers may be a material that is different or the same as the woven fabric layer. They may be oriented fibers having a high tenacity for example. In an exemplary embodiment, the fibers are a material that has a higher melt temperature than the woven fabric layer material and may be polyester, polyamide, polyimide, aramid, glass, carbon, metal and the like. The fibers may further increase cut resistance, especially when glass, metal or carbon fibers are used, as these materials have a high hardness and may be difficult to initiate a cut therethrough. An exemplary fiber is a blend of two fibers, with the first fiber being polypropylene and the second fiber being polyamide. The ratio is 30% polypropylene and 70% polyamide, wherein there are two different PA fibers. The properties as outlined in Table 3:

**Table 3**

| **Total Blend** | [%] | 70% PA / 30% PP |
|---|---|---|
| | | |

| 70% PA Fiber (Blend of 70%PA-30%PA6) | | |
|---|---|---|
| **PA fiber** | | |
| Fineness | [dtex] | 3.3 |
| Staple length | [mm] | 50 |
| Color | | white |

| **PA6 fiber** | | |
|---|---|---|
| Fineness | [dtex] | 6.7 |
| Staple length | [mm] | 50 |
| Color | | white |
| | | |

| PP Fiber | | |
|---|---|---|
| **PP fiber** | | |
| Fineness | [dtex] | 2.8 |
| Staple length | [mm] | 40 |
| Color | | white |

Again, the inside layer of the formable and tear resistant polymeric composite may have the same or similar construction and comprises fibers as detailed herein.

An exemplary formable and tear resistant polymeric composite may include one or more layers that are a color. A color may be included in a woven fabric layer, a cover layer, the fibers, an adhesive layer and any combination thereof. In an exemplary embodiment, the cover layer may be translucent to allow some combination of color to be visible, such as from the fibers and the woven fabric layer or an adhesive layer. When these two components are different colors and the cover layer is translucent, a mottled look may be produced.

### Comparative Example

A composite that has been used to make formable articles includes seven woven layers of a 0.15mm thick twill weave of a polypropylene tape bound together by similar melt temperature 0.02mm thick polypropylene film layers was analyzed for the mechanical properties as shown in Table 4.

**Table 4**

| Property | Unit | Result | Test Method |
|---|---|---|---|
| Thickness | [mm] | 1.21 | *DIN ISO 9863-1* |
| Weight | [g/m²] | 1110.0 | |
| Dart Impact Energy | [J] | 20.0 | *DIN EN 6603-2* |

| Elongation | | | |
|---|---|---|---|
| MD | [%] | 15.3 | *ISO 527* |
| CD | [%] | 18.8 | *ISO 527* |

| Tenacity | | | |
|---|---|---|---|
| MD | [MPa] | 145.0 | *ISO 527* |
| CD | [MPa] | 127.0 | *ISO 527* |

| Modulus | | | |
|---|---|---|---|
| MD | [GPa] | 3.0 | *ISO 527* |
| CD | [GPa] | 3.0 | *ISO 527* |

| Tear resistance | | | |
|---|---|---|---|
| MD | [MPa] | 47.9 | *DIN 53515* |
| CD | [MPa] | 50.4 | *DIN 53515* |

| Flexural Modulus | | | |
|---|---|---|---|
| MD | [GPa] | 2.8 | *ISO 178* |
| CD | [GPa] | 2.9 | *ISO 178* |

| Flexural strength | | | |
|---|---|---|---|
| MD | [MPa] | 48.2 | *ISO 178* |
| CD | [MPa] | 50.8 | *ISO 178* |
| Roughness measurement (Ra) | | | |
| | microns | 0.42 | *ISO 4287* |

| gloss level | Angle | Gloss | |
|---|---|---|---|
| | 20° | 39.4 | *ISO 2813* |
| | 60° | 70.3 | *ISO 2813* |
| | 80° | 99.2 | *ISO 2813* |

### Comparative Example 2

A composite that has been used to make formed articles includes 28 layers of 40micron thick biaxially oriented film layers and two layers of colored polypropylene film was analyzed for the properties shown in Table 5

**Table 5**

| Property | Unit | Result | Test Method |
|---|---|---|---|
| Thickness | [mm] | 1.2 | DIN ISO 9863-1 |
| Weight | [g/m²] | 1123.0 | |
| Impact Energy | [J] | 51.2 | DIN EN 6603-2 |
| | | | |

| Elongation | | | |
|---|---|---|---|
| MD | [%] | 94.6 | ISO 527 |
| CD | [%] | 21.4 | ISO 527 |

| Tenacity | | | |
|---|---|---|---|
| MD | [MPa] | 103.8 | ISO 527 |
| CD | [MPa] | 199.0 | ISO 527 |

| Modulus | | | |
|---|---|---|---|
| MD | [GPa] | 2.4 | ISO 527 |
| CD | [GPa] | 4.7 | ISO 527 |

| Flexural Strength | | | |
|---|---|---|---|
| MD | [MPa] | 44.3 | ISO 178 |
| CD | [MPa] | 55.6 | ISO 178 |

| Tear Strength | | | |
|---|---|---|---|
| | [MPa] | 4.5 | DIN 53515 |
| Roughness measurement (Ra) | microns | 0.55 | ISO 4287 |
| gloss level | Angle | Gloss | |
| | 20° | 32.2 | ISO 2813 |
| | 60° | 65.0 | ISO 2813 |
| | 80° | 95.4 | ISO 2813 |

### Example 1

An exemplary formable and tear resistant polymeric composite included an inner portion with eleven layers of the biaxially oriented film layers as described in Table 1, and both an outside portion with a single woven fabric layer of polypropylene tape strands and 30g/m2 of polyamide fiber needled punched therein. The inside portion has a single woven fabric layer but does not include the fibers bonded thereto. The woven fabric layer was adhered to the inner portion by a polypropylene adhesive layer and a single layer of biaxially oriented polypropylene film formed the cover layers, again, bound by a polypropylene adhesive layer. The adhesive layer was a polypropylene copolymer that had a ~20°C lower melt temp than the woven layers and had a similar melting temperature to the inner portion inner adhesive layer. This formable and tear resistant polymeric composite had the properties as detailed in Table 6.

**Table 6**

| Property | Unit | Result | Test Method |
|---|---|---|---|
| **Thickness** | [mm] | **1.13** | *DIN ISO 9863-1* |
| **Weight** | [g/m²] | **1048.8** | |
| **Dart Impact Energy** | [J] | **19.6** | *DIN EN 6603-2* |

| **Elongation** | | | |
|---|---|---|---|
| **MD** | [%] | **12.0** | *ISO 527* |
| **CD** | [%] | **12.2** | *ISO 527* |

| **Tenacity** | | | |
|---|---|---|---|
| **MD** | [MPa] | **98.5** | *ISO 527* |
| **CD** | [MPa] | **150.6** | *ISO 527* |

| **Modulus** | | | |
|---|---|---|---|
| **MD** | [GPa] | **2.8** | *ISO 527* |
| **CD** | [GPa] | **3.9** | *ISO 527* |

| **Tear resistance** | | | |
|---|---|---|---|
| **MD** | [MPa] | **46.4** | *DIN 53515* |
| **CD** | [MPa] | **55.3** | *DIN 53515* |

| **Flexural Modulus** | | | |
|---|---|---|---|
| **MD** | [GPa] | **2.4** | *ISO 178* |
| **CD** | [GPa] | **2.8** | *ISO 178* |

| **Flexural strength** | | | |
|---|---|---|---|
| **MD** | [MPa] | **45.0** | *ISO 178* |
| **CD** | [MPa] | **38.3** | *ISO 178* |
| | | | |
| **Roughness measurement (Ra)** | microns | **2.70** | *ISO 4287* |
| | Angle | Gloss | |
| **gloss level** | 20° | **1.4** | *ISO 2813* |
| | 60° | **11.3** | *ISO 2813* |
| | 80° | **21.4** | *ISO 2813* |

The tear resistance of the formable and tear resistant polymeric composite of Example 1 was much higher, about an order of magnitude higher than the tear strength of comparative example 2 material, having 28 layers of 40micron thick biaxially oriented film layers and equivalent to the tear strength of comparative example 1, having seven woven fabric layers and not being well suited for thermal forming. Also, the surface roughness of example 1, 2.7 microns, was much higher than comparative example 1, 0.42 microns and comparative example 2, 0.55 microns. The gloss measurement comparison shows that the fibers added to the material of Example 1, wherein the outside surface was measure is much less than either comparative example 1 or 2. The gloss at 60 degrees for the example 1 material was only 11.3, whereas for comparative example 1 it was 70.3 and for comparative example 2 it was 65.

In addition, the composite of example 1 was more formable than the comparative example 2 composite as evidenced by a 30 degrees Celsius lower forming temperature, a 30% shorter heat cycle time for a deep-draw formed part and a lower propensity for surface wrinkles and had a cut resistance that was about the same as the comparative example having seven layers of woven fabric and more than 10 times more tear resistant that the comparative example having 28 layers of biaxially oriented polymer film. This was a surprising result. It was expected that the formability would be improved but the comparable cut resistance with only a fraction of the woven fabric layers was not expected. In addition, the formable and tear resistant polymeric composite of Example 1 has a surface roughness that was more than six times greater than the comparative example and therefore would be much less glossy.

The summary of the invention is provided as a general introduction to some of the embodiments of the invention, and is not intended to be limiting. Additional example embodiments including variations and alternative configurations of the invention are provided herein.

### BRIEF DESCRIPTION OF SEVERAL VIEWS OF THE DRAWINGS

The accompanying drawings are included to provide a further understanding of the invention and are incorporated in and constitute a part of this specification, illustrate embodiments of the invention, and together with the description serve to explain the principles of the invention.
Figure 1 shows a cross sectional view of an exemplary formable and tear resistant polymeric composite having an inner formable portion between an inside layer and an outside portion that is tear resistant.
Figure 2 shows top view of an exemplary woven layer having a twill weave of strands.
Figure 3 shows top view of an exemplary woven layer having a sateen weave of strands.
Figure 4 shows a cross sectional view of an exemplary inner formable portion having a plurality of oriented polymer film layers coupled together by an adhesive layer.
Figure 5 shows cross sectional view of an exemplary outside portion having a plurality of fibers, coupled to the outside surface of the woven fabric layer.
Figure 6 shows cross sectional view of an exemplary outside portion having a plurality of fibers, coupled to the outside surface of the woven fabric layer and an outside adhesive layer configured over the fibers to produce a matt finish.
Figure 7 show an exemplary formable and tear resistant polymeric composite formed into a formed article, a formed panel of a suitcase.

Corresponding reference characters indicate corresponding parts throughout the several views of the figures. The figures represent an illustration of some of the embodiments of the present invention and are not to be construed as limiting the scope of the invention in any manner. Some of the figures may not show all of the features and components of the invention for ease of illustration, but it is to be understood that where possible, features and components from one figure may be an included in the other figures. Further, the figures are not necessarily to scale, some features may be exaggerated to show details of particular components. Therefore, specific structural and functional details disclosed herein are not to be interpreted as limiting, but merely as a representative basis for teaching one skilled in the art to variously employ the present invention.

### DETAILED DESCRIPTION OF THE ILLUSTRATED EMBODIMENTS

**As** used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Certain exemplary embodiments of the present invention are described herein and are illustrated in the accompanying figures. The embodiments described are only for purposes of illustrating the present invention and should not be interpreted as limiting the scope of the invention. Other embodiments of the invention, and certain modifications, combinations and improvements of the described embodiments, will occur to those skilled in the art and all such alternate embodiments, combinations, modifications, improvements are within the scope of the present invention.

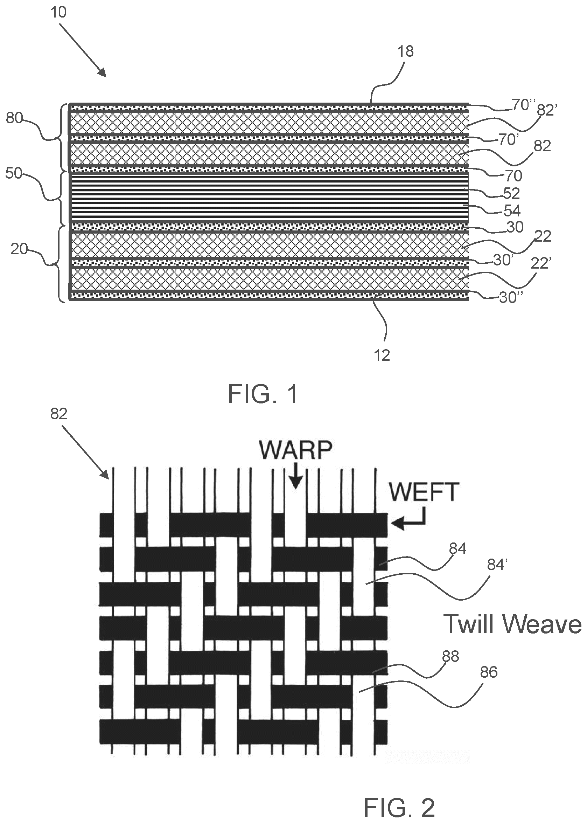

As shown in FIG. 1, an exemplary formable and tear resistant polymeric composite 10 has an inner formable portion 50 configured between an inside portion 20 and an outside portion 80. The inner formable portion has a plurality of oriented polymer layers 52 coupled together by an inner adhesive layer 54. As described herein, the oriented polymer layers may be uniaxially oriented, wherein they are stretched in one direction or biaxially oriented polymer layers, wherein they are stretched and tensilized in two directions, such as machine and cross-machine directions. The inner adhesive layer between the oriented polymer film layers may be integral to the oriented polymer film, wherein the inner adhesive is a layer attached to one of the oriented polymer film layers prior to forming the inner formable portion by bonding the oriented film layers together with said inner adhesive. The inside portion 20 and outside portion 80 may each contain a woven fabric layer 22, 82, respectively. The woven fabric layers, 22, 22' of the inside portion may be adhered together with an adhesive layer 30' and an adhesive layer 30" may form the inside surface 12 of the formable and tear resistant polymeric composite 10. Likewise, the woven fabric layers, 82, 82' of the outside portion may be adhered together with an adhesive layer 70' and an adhesive layer 70" may form the outside surface 18 of the formable and tear resistant polymeric composite 10. An adhesive layer 70 may adhere the woven fabric layer 82 to the inner portion 50 and an adhesive 30 may adhere the woven fabric layer 22 to the inner portion. The inside portion and outside portions may be similar or the same in construction to balance the stresses within the composite to prevent curling.

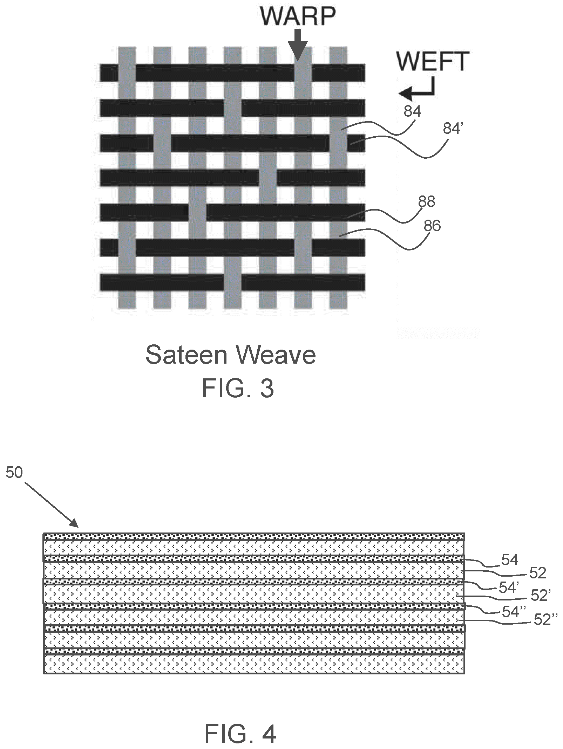

Referring now to FIGS. 2 and 3, an exemplary inside and/or outside portion may comprise a woven fabric layer 82 having a twill weave, as shown in FIG. 2, or a sateen weave, as shown in FIG. 3. The woven fabric has warp strands 86 and weft strands 88, each of which may be an oriented polymeric strand 84, 84', respectively. These particular types of weaves have higher cut resistance and higher tear propagation strengths than other common weaves, such as plain, grosgrain weave, crepe weave, panama weave and variations thereof.

**As** shown in FIG. 4, an exemplary inner formable portion has a plurality of oriented polymer layers 52, 52', 52", such as thin film layers that are bonded together by an inner adhesive layer 54, 54', 54". This inner adhesive layer may be integral to the oriented polymer layer, in that it is coupled to the oriented film layer on one or both surfaces. The inner adhesive layer may be continuous or discontinuous and preferably has a melting temperature that is effectively lower than the oriented polymer layer melting temperature to enable the layers to be bonded together with heat and pressure without melting the oriented polymer layers, whereby the increased tensile strength of the oriented polymer players, due to orientation and stretching, is not lost due to exposure to high temperature.

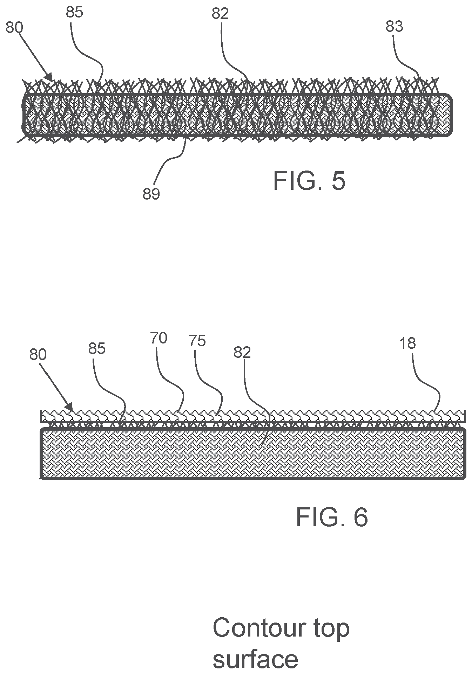

Referring now to FIGS. 5 and 6, an exemplary outside portion 80 has a plurality of fibers 85, coupled to the outside surface 83 of the woven fabric layer 82, such as by needle punching, spun bonding, wet laid process and the like. The fibers may extend through a portion of the woven fabric layer and may extend all the way through the thickness of the woven fabric layer to the inner surface 89 of the woven fabric layer, as shown. The fibers extend on an outer surface of the woven fabric layer and as shown in FIG. 6, an outside cover layer 75, such as an outside adhesive layer 70 is configured over the fibers 85 and is bonded to the woven fabric layer. Note that the outside cover layer has a rough surface as it contours over the fibers 85 configured between the outside cover layer and the outside woven fabric layer 82. The outside cover layer may comprise an adhesive that bonds to the fibers and/or to the woven fabric layer. As described herein, the rough surface of the outside surface 18, of the formable and tear resistant polymeric composite 10 may produce a matt finish. The fibers may be made out of a polymeric material, preferably a higher melting temperature polymer material than the woven fabric layer or the outside cover layer and comprise or be made out of polyamide, polyimide, glass, carbon and the like. The fibers may be a thermoset polymeric material. Again, this same construction may be configured on an inside portion, wherein an inside surface 12, as shown in FIG. 1, has a matt finish from an inside cover layer that conforms over fibers.

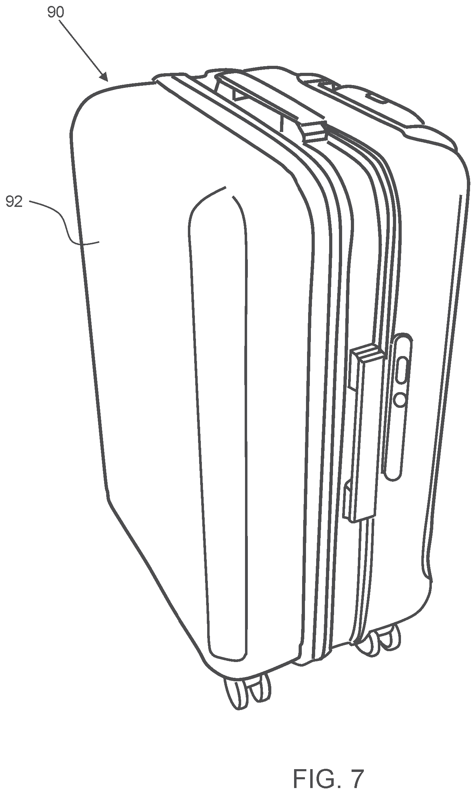

Figure 7 shows an exemplary formable and tear resistant polymeric composite 10 formed into a formed article 90, a formed panel 92 of a suitcase.

The version of all standardized test methods, as of June 17, 2021, listed in Tables 1 to 6 are hereby incorporated by reference in their entirety.

It will be apparent to those skilled in the art that various modifications, combinations and variations can be made in the present invention without departing from the scope of the invention. Specific embodiments, features and elements described herein may be modified, and/or combined in any suitable manner. Thus, it is intended that the present invention cover the modifications, combinations and variations of this invention provided they come within the scope of the appended claims and their equivalents.

### INVENTIONS

Aspects of the invention are set out in the clauses below.
1. A formable and tear resistant polymeric composite comprising:
   a) an inner formable portion comprising:
      i) a plurality of oriented polymer film layers;
   b) an inside layer comprising:
      i) an inside woven layer that is bonded to the inner moldable portion;
   c) an outside portion comprising:
      i) an outside woven layer that is bonded to the inner moldable portion;
   wherein the inner formable portion is configured to retain a formed three dimensional shape; and
   wherein the outside woven layer is tear resistant or configured to prevent tear propagation.
2. The formable and tear resistant polymeric composite of clause 1, wherein the plurality of oriented polymer films layers comprises biaxially oriented polymeric film layers.
3. The formable and tear resistant polymeric composite of clause 1, wherein the plurality of oriented polymer films layers consists of biaxially oriented polymeric film layers.
4. The formable and tear resistant polymeric composite of clause 1, wherein the plurality of oriented polymer films layers comprises uniaxially oriented polymeric film layers having an oriented axis.
5. The formable and tear resistant polymeric composite of clause 4, wherein the uniaxially oriented polymeric film layers are configured with the oriented axes configured in offset angles.
6. The formable and tear resistant polymeric composite of clause 4, wherein the uniaxially oriented polymeric film layers are configured with the oriented axes substantially orthogonal.
7. The formable and tear resistant polymeric composite of clause 1, wherein the plurality of oriented polymer films layers consists of uniaxially oriented polymeric film layers.
8. The formable and tear resistant polymeric composite of clause 1, wherein the inner moldable portion comprises an inner adhesive layer between the plurality of oriented polymer film layers.
9. The formable and tear resistant polymeric composite of clause 8, wherein the inner adhesive layer has a melt temperature that is lower than a melt temperature of the oriented polymer film layers.
10. The formable and tear resistant polymeric composite of clause 9, wherein the inner adhesive layer is a discontinuous adhesive layer.
11. The formable and tear resistant polymeric composite of clause 9, wherein the inner adhesive layer is integral to each of the plurality of oriented polymer film layers.
12. The formable and tear resistant polymeric composite of clause 1, wherein the outside woven layer is bonded to the inner moldable portion by an adhesive.
13. The formable and tear resistant polymeric composite of clause 1, wherein the adhesive configured between the outside woven layer and the inner moldable portion has a lower melt temperature than the outside woven layer and the plurality of oriented polymer film layers of the inner moldable portion.
14. The formable and tear resistant polymeric composite of clause 1, wherein the outside woven layer comprises strands that are woven to form said outside woven layer.
15. The formable and tear resistant polymeric composite of clause 14, wherein the strands are oriented polymer strands.
16. The formable and tear resistant polymeric composite of clause 14, wherein said strands are tapes.
17. The formable and tear resistant polymeric composite of clause 14, wherein the tapes are oriented tapes.
18. The formable and tear resistant polymeric composite of clause 17, wherein the weave is a twill weave.
19. The formable and tear resistant polymeric composite of clause 17, wherein the weave is a sateen weave.
20. The formable and tear resistant polymeric composite of clause 14, wherein the weave is a twill weave.
21. The formable and tear resistant polymeric composite of clause 14, wherein the weave is a sateen weave.
22. The formable and tear resistant polymeric composite of clause 1, wherein the outside portion comprises fibers coupled to the outside woven layer.
23. The formable and tear resistant polymeric composite of clause 22, wherein the fibers are adhered to the outside woven layer.
24. The formable and tear resistant polymeric composite of clause 22, wherein the fibers comprise a first fiber and a second fiber and wherein the first fiber is a different material than the second fiber.
25. The formable and tear resistant polymeric composite of clause 24, wherein the first fiber is a thermoplastic fiber.
26. The formable and tear resistant polymeric composite of clause 24, wherein the first fiber is a thermoplastic fiber and the second fiber is a thermoplastic fiber having a melt temperature of at least 10oC higher than a melt temperature of the first fiber.
27. The formable and tear resistant polymeric composite of clause 24, wherein the first fiber is a thermoplastic fiber and the second fiber is a non-thermoplastic fiber selected from the group consisting of carbon, glass, and metal.
28. The formable and tear resistant polymeric composite of clause 22, wherein the fibers have a higher melt temperature than the outside woven layer.
29. The formable and tear resistant polymeric composite of clause 28, wherein the fibers comprise polyamide.
30. The formable and tear resistant polymeric composite of clause 28, wherein the fibers comprise carbon.
31. The formable and tear resistant polymeric composite of clause 28, wherein the fibers comprise polyimide.
32. The formable and tear resistant polymeric composite of clause 28, wherein the fibers comprise aramid.
33. The formable and tear resistant polymeric composite of clause 28, wherein the fibers comprise glass fibers.
34. The formable and tear resistant polymeric composite of clause 28, wherein the fibers comprise a thermoset polymer.
35. The formable and tear resistant polymeric composite of clause 28, wherein the fibers comprise polyester.
36. The formable and tear resistant polymeric composite of clause 28, wherein the fibers comprise metal.
37. The formable and tear resistant polymeric composite of clause 22, wherein the fibers comprise a core shell fiber having a core that has a higher melting temperature than a shell.
38. The formable and tear resistant polymeric composite of any of clauses 22 to 37, wherein the fibers have a length of 10mm or more.
39. The formable and tear resistant polymeric composite of any of clauses 22 to 37, wherein the fibers have a length 20mm or more.
40. The formable and tear resistant polymeric composite of any of clauses 22 to 37, wherein the fibers have a denier of 1 denier or more.
41. The formable and tear resistant polymeric composite of any of clauses 22 to 37, wherein the fibers have a denier of 2 denier or more.
42. The formable and tear resistant polymeric composite of any of clauses 22 to 37, wherein the outside woven layer comprises polyethylene or polypropylene, or polyethylene terephthalate.
43. The formable and tear resistant polymeric composite of any of clauses 22 to 37, wherein an outside surface of the formable and tear resistant polymeric composite has a matt finish as defined by an Ra value of at least 1.0 microns.
44. The formable and tear resistant polymeric composite of any of clauses 22 to 36, wherein an outside surface of the formable and tear resistant polymeric composite has a matte finish having a gloss at 60 degrees of less than 20.
45. The formable and tear resistant polymeric composite any of clauses 22 to 37, wherein the fibers extend into the outside woven layer.
46. The formable and tear resistant polymeric composite any of clauses 22 to 37, wherein the fibers extend through the outside woven layer to an inner surface of the outside woven layer.
47. The formable and tear resistant polymeric composite of clause 46, wherein the outside woven layer comprises fibers needle punched through the outside woven layer.
48. The formable and tear resistant polymeric composite of clause 46, wherein an outside surface of the formable and tear resistant polymeric composite has a matte finish as defined by an Ra value of at least 1.0 microns.
49. The formable and tear resistant polymeric composite of clause 46, wherein an outside surface of the formable and tear resistant polymeric composite has a matte finish having a gloss at 60 degrees of less than 20.
50. The formable and tear resistant polymeric composite any of clauses 22 to 37, wherein the fibers have a fiber color
51. The formable and tear resistant polymeric composite any of clauses 22 to 37, wherein the fibers have a fiber color that is different from a strand color of the outside woven layer.
52. The formable and tear resistant polymeric composite of any of clauses 22 to 37, further comprising an outer film layer adhered to an outside surface of the outside woven layer and wherein the outer film layer that has a lower melt temperature than the fibers.
53. The formable and tear resistant polymeric composite of clause 52, wherein an outside surface of the formable and tear resistant polymeric composite has a matte finish as defined by an Ra value of at least 1.0 microns.
54. The formable and tear resistant polymeric composite of clause 52, wherein an outside surface of the formable and tear resistant polymeric composite has a matte finish having a gloss at 60 degrees of less than 20.
55. The formable and tear resistant polymeric composite of clause 52, wherein the outer film layer has an outer film layer color.
56. The formable and tear resistant polymeric composite of clause 55, wherein the outer film layer color is different from an outside woven layer color.
57. The formable and tear resistant polymeric composite of clause 1, further comprising an outer film layer adhered to an outside surface of the outside woven layer and wherein the outer film layer that has a lower melt temperature that the outside woven layer.

## Claims

1. A formable and tear resistant polymeric composite comprising:
a) an inner formable portion comprising:
i) a plurality of uniaxially oriented polymer film layers;
ii) a plurality of inner adhesive layers;
wherein adjacent oriented polymer film layers of the plurality of oriented polymer film layers are bonded together by an inner adhesive layer of said plurality of inner adhesive layers that have a melt temperature that is lower than a melt temperature of the oriented polymer film layers;
b) an inside layer comprising:
i) an inside woven layer that is bonded to the inner formable portion, said inside woven layer comprising a woven fabric that includes tapes as polymeric strands of polymeric material, wherein the tapes are oriented;
c) an outside portion comprising:
i) an outside woven layer that is bonded to the inner formable portion, said outside woven layer comprising tapes that are woven to form said outside woven layer, wherein the tapes are oriented tapes;
and
wherein the plurality of oriented polymer film layers comprises uniaxially oriented polymeric film layers having an oriented axis;
wherein the uniaxially oriented polymeric film layers are configured with the oriented axes configured in offset angles;
wherein an oriented axis of a first layer of the plurality of uniaxially oriented polymeric film layers is configured substantially orthogonal, from 85 degrees to 95 degrees of an oriented axis of a second and adjacent layer of the plurality of uniaxially oriented polymeric film layers.

2. The formable and tear resistant polymeric composite of claim 1, wherein the plurality of oriented polymer films layers consists of uniaxially oriented polymeric film layers.

3. The formable and tear resistant polymeric composite of claim 1, wherein the inner formable portion comprises an inner adhesive layer between the plurality of oriented polymer film layers.

4. The formable and tear resistant polymeric composite of claim 3, wherein the inner adhesive layer has a melt temperature that is lower than a melt temperature of the oriented polymer film layers.

5. The formable and tear resistant polymeric composite of claim 4, wherein the inner adhesive layer is a discontinuous adhesive layer.

6. The formable and tear resistant polymeric composite of claim 4, wherein the inner adhesive layer is integral to each of the plurality of oriented polymer film layers.

7. The formable and tear resistant polymeric composite of claim 1, wherein the outside woven layer is bonded to the inner formable portion by an adhesive.

8. The formable and tear resistant polymeric composite of claim 1, wherein an adhesive configured between the outside woven layer and the inner formable portion has a lower melt temperature than the outside woven layer and the plurality of oriented polymer film layers of the inner formable portion.

9. The formable and tear resistant polymeric composite of claim 1, wherein the outside portion comprises two woven layers of woven tapes in which the two layers of the outside portion are bonded together by an outside adhesive layer.

10. The formable and tear resistant polymeric composite of claim 9, wherein the inside layer comprises two layers of woven tapes, in which the two layers of woven tapes are bonded together by an outside adhesive layer.

11. The formable and tear resistant polymeric composite of claim 9, wherein the tapes of the two layers of woven tapes of the inside layer are oriented tapes.

12. The formable and tear resistant polymeric composite of claim 1, wherein the formable and tear resistant polymeric composite is configured in a three-dimensional shape, that produces or contains a volume.

13. The formable and tear resistant polymeric composite of claim 1, wherein the outside portion comprises fibers coupled to the outside woven layer.

14. The formable and tear resistant polymeric composite of claim 13, wherein the outside woven layer comprises fibers needle punched through the outside woven layer.

15. The formable and tear resistant polymeric composite of claim 13, wherein the fibers have a fiber color that is different from a color of the outside woven layer.
